# EUROPÄISCHE PATENTANMELDUNG

(11) **EP 4 644 298 A1**
(43) Veröffentlichungstag der Anmeldung: **05.11.2025**
(21) Anmeldenummer: 25166342.3
(22) Anmeldetag: 26.03.2025
(51) Int. Cl.: B65G 39/02, B65G 39/09

(54) **EXZENTRISCH STEHENDE UNTERGURTROLLE**

(30) Priorität: 30.04.2024 DE 102024112195
(71) Anmelder: Stadler Anlagenbau GmbH, 88361 Altshausen (DE)
(72) Erfinder: BUCK, Tobias, 88356 Ostrach (DE)
(74) Vertreter: RavensPAT Patentanwälte Partnerschaft mbB

(57) **Zusammenfassung**

1. Tragrolle 1, umfassend einen Träger 2, sowie einen um den Träger umlaufend drehbar gelagerten Mantel 3, wobei der Träger 2 eine Achsaufnahme 4 aufweist, wobei die Achsaufnahme 4 dazu ausgebildet ist, die den Träger drehfest insbesondere an einer Achse 5 zu befestigen, wobei die Achsaufnahme 4 exzentrisch zu einem Zentrum des Mantels 3 und/oder einem Zentrum des Trägers 2 und an dem Träger 2 ausgebildet ist.

## Beschreibung

Die vorliegende Erfindung betrifft das technische Gebiet der Fördertechnik mittels Förderbänder an Förderern.

Um Fördergut mittels eines Förderers transportieren zu können, wird in der Regel ein Fördergurt im Obertrum entweder mittels einer Gleitfläche oder mittels Rollen aufgenommen. Im Untertrum, in welchem der Fördergurt zurückgeführt wird, wird der Fördergurt in der Regel mittels Untergurtrollen gestützt, wobei der Fördergurt zur Vermeidung eines Durchhängens, auf den Untergurtrollen aufliegt.

Die Untergurtrollen sind in der Regel durch eine rotierende Trommel und bei Stollenmitnehmern teilweise mit Laufringen ausgeführt. Längliche Störstoffe, wie beispielsweise Tonbänder, insbesondere im Bereich der Abfallindustrie, können sich an den Untergurtrollen verfangen und als sogenannte Wickler hängen bleiben, deren Entfernung aufwändig und zeitintensiv sein kann. Derartige Wickler erzeugen somit einen hohen Wartungsaufwand, um die Funktionsfähigkeit des Förderers zu gewährleisten. Im Stand der Technik bekannt sind daher sogenannte stehende Untergurtrollen bekannt, bei welchen sich die Achse oder die Trägerkappe drehfest ausgebildet sind und sich nur der Reifen drehen kann. Hierdurch kann das Aufwickeln der länglichen Störstoffe zwar verhindert werden, nachteilig ist hierbei jedoch, dass bei einem Einsatz solcher stehenden Untergurtrollen die Verwendung von Fördergurten mit Stollen, sogenannten Stollenbändern, erschwert ist.

Technische Aufgabe der Erfindung ist es, den Stand der Technik zu verbessern und stehende Untergurtrollen für die Fördertechnik zu optimieren.

Die technische Aufgabe wird durch einen Gegenstand mit den technischen Merkmalen nach den unabhängigen Ansprüchen gelöst.

Vorteilhafte Ausführungsformen sind Gegenstand der abhängigen Ansprüche, der Beschreibung und der Zeichnungen.

Alle in Verbindung mit einzelnen Ausführungsformen der Erfindung erläuterten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Patentansprüche gegeben und wird durch die in der Beschreibung erläuterten oder den Figuren dargestellten Merkmale nicht beschränkt.

Im Sinne der Erfindung sind die Begriffe eines Förderers und einer Förderanlage als äquivalent zu verstehen. Weiterhin sind die Begriffe eines Obergurts und eines Obertrums einerseits, sowie die Begriffe eines Obertrums und eines Untertrums als äquivalent zu betrachten.

Gemäß einem Aspekt wird die technische Aufgabe der Erfindung gelöst durch eine Tragrolle, umfassend einen Träger, sowie einen um den Träger umlaufend drehbar gelagerten Mantel, wobei der Träger eine Achsaufnahme aufweist, wobei die Achsaufnahme dazu ausgebildet ist, den Träger drehfest insbesondere an einer Achse zu befestigen, wobei die Achsaufnahme exzentrisch zu einem Zentrum des Mantels und/oder einem Zentrum des Trägers und an dem Träger ausgebildet ist.

Vorteil der exzentrischen Anordnung der Achsaufnahme ist, dass Fördergurte mit hohen Stollen, wie beispielsweise mit einer Höhe zwischen 30 mm und 50 mm, auf einer stehenden Untergurtrolle geführt werden können, die einen kleinen Durchmesser, wie beispielsweise zwischen 120 mm und 140 mm, aufweist. Der Außendurchmesser kann somit verringert werden und ein flexiblerer Einsatz wird ermöglicht.

Im Sinne der Erfindung kann die Achse beispielsweise eine Achse eines Förderers sein, die zum Tragen von Untergurtrollen ausgebildet ist.

In einer technisch vorteilhaften Ausführungsform ist vorgesehen, dass die Achsaufnahme derart exzentrisch angeordnet ist, sodass ein Durchmesser der Tragrolle von einem axialen Zentrum der Achsaufnahme in einem Verhältnis von 1:2, insbesondere 1:3, bevorzugt 1:4 geteilt wird.

Vorteilhaft kann so ein flexibler Abstand zwischen Zentrum der Achsaufnahme und dem auf der stehenden Untergurtrolle aufliegenden Fördergurt gewählt werden.

In einer weiteren technisch vorteilhaften Ausführungsform ist vorgesehen, dass der Träger mehrteilig ausgebildet ist, wobei der Träger eine erste Trägerkappe und eine zweite Trägerkappe umfasst, wobei beide Trägerkappen identisch ausgebildet sind, wobei jede der Trägerkappen in einer Draufsicht auf ihre Innenseite asymmetrisch ausgebildet ist.

Vorteilhaft kann so eine vereinfachte Installation und ein flexibler Umbau, beispielsweise bei einem Wechsel der Fördergurte, ermöglicht werden. Weiterhin kann so ein einfacher Wechsel des Reifens ermöglicht werden.

Weiterhin ist in einer technisch vorteilhaften Ausführungsform vorgesehen, entweder dass der Träger oder wenigstens eine der Trägerkappen Klemmmittel umfasst oder aufweist, oder dass der Träger oder wenigstens eine der Trägerkappen als Klemmmittel ausgebildet ist, wobei die Klemmmittel zur axialen und drehfesten Befestigung des Trägers an der Achse ausgebildet sind.

Vorteilhafterweise kann somit auf Befestigungsbohrungen verzichtet und eine vereinfachte Konstruktion und Installation weiter verbessert werden.

Darüber hinaus ist in einer technisch vorteilhaften Ausführungsform vorgesehen, dass jede Trägerkappe im Bereich der Achsaufnahme axial hervorstehende Nasen umfasst, wobei die Nasen jeweils eine axiale ausgerichtete Anlaufschräge aufweisen und wobei die Nasen zur Trägerkappenachse versetzt angeordnet sind.

Vorteilhaft kann so eine einfache Möglichkeit zur klemmenden Fixierung der Untergurtrolle an einer Achse geschaffen werden. Beispielsweise können die Trägerkappen mittels durch sie hindurchführende Spannschrauben aneinandergedrückt werden, was einen radialen Versatz der Trägerkappen zueinander und somit eine klemmende Verbindung der Untergurtrolle mit einer Achse erzeugen kann. Im Sinne der Erfindung kann unter dem Begriff des Klemmens auch der des Spannens und umgekehrt verstanden werden.

Außerdem ist in einer technisch vorteilhaften Ausführungsform vorgesehen, dass die Achsaufnahme quadratisch ausgebildet ist.

Vorteilhaft kann bei einer quadratischen Achsaufnahme die Untergurtrolle gegebenenfalls auch um 90° gedreht angebracht werden, um einen Einsatz zu ermöglichen, bei welchem das Achszentrum in der Mitte des Durchmessers der Untergurtrolle angeordnet ist, wodurch ein Durchmesser der Untergurtrolle von dem axialen Zentrum der Achsaufnahme in einem Verhältnis von 1:1 geteilt würde. Darüber hinaus ermöglicht eine quadratische Form, beispielsweise zur Aufnahme eines Vierkant-Rohrs, eine sehr einfache Installation, da die Ausrichtung für einen Monteur sehr leicht ersichtlich ist.

Weiterhin ist in einer technisch vorteilhaften Ausführungsform vorgesehen, dass jede der beiden Trägerkappen wenigstens zwei in axialer Richtung und radial zu der Achsaufnahme beabstandet verlaufenden Durchgangsbohrungen umfasst, welcher derart ausgebildet sind, dass die Trägerkappen mittels Verbindungsmitteln zusammengesogen werden können.

Vorteilhaft kann so eine Selbstzentrierung im Zusammenwirken mit einer kostengünstigen und einfach zu Installierenden Befestigungsmöglichkeit geschaffen werden.

Darüber hinaus ist in einer technisch vorteilhaften Ausführungsform vorgesehen, dass der Träger ein Lager umfasst, welches zwischen den Trägerkappen derart gehalten ist, dass der Mantel auf dem Lager zwischen den Trägerkappen frei drehbar abgestützt ist, wobei das Lager insbesondere als Kugellager oder als Rollenlager oder als Gleitlager ausgebildet ist.

Vorteilhaft können hierdurch technisch bewährten Elementen zum Einsatz gelangen und die Tragrolle weiter verbessert werden.

Weiterhin ist in einer technisch vorteilhaften Ausführungsform vorgesehen, dass die Achsaufnahme des Trägers durch die beiden Trägerkappen gebildet ist.

Hierdurch kann eine Konstruktion vereinfacht werden und eine größere Flexibilität hierbei geschaffen werden.

Gemäß einem weitern Aspekt wird die technische Aufgabe gelöst durch eine Vorrichtung zum Stützen eines Untergurts eines Förderers, umfassend wenigstens eine Tragrolle, sowie eine Achse zur Befestigung der Tragrolle, wobei die Tragrolle nach einem der vorangehenden Ansprüche, insbesondere als sogenannte stehende Untergurtrolle, ausgebildet ist.

In einer technisch vorteilhaften Ausführungsform ist vorgesehen, dass ein Profil der Achse derart ausgebildet ist, sodass ein Drehen des Trägers relativ zu der Achse verhindert ist, wobei das Profil der Achse insbesondere einem Kantprofil oder einem Quadratrohr, bevorzugt einem Vier-Kant-Rohr entspricht.

Vorteilhaft kann so eine kompaktere Bauweise ermöglicht werden und die Untergurtrolle kann in Rahmenkonstruktionen des Förderers integriert werden. Zusätzlich können günstig Möglichkeiten für Abdeckungen des Untergurtbandes ermöglicht werden. Der Einsatz von großen Stollen sorgt somit nicht für einen großen Überstand an der Unterseite des Förderers.

Gemäß einem weitern Aspekt wird die technische Aufgabe gelöst durch eine Vorrichtung zum Fördern von Gütern oder Materialien, insbesondere Abfall, umfassend wenigstens eine Antriebswelle, wenigstens eine Abtriebswelle und wenigstens einen Fördergurt, wobei der wenigstens eine Fördergurt einen Obertrum, sowie einen Untertrum umfasst, wobei der Untertrum mittels wenigstens einer Tragrolle gestützt ist, wobei die die Tragrolle nach wenigstens einem der vorausgehenden Ansprüche, insbesondere als sogenannte stehende Untergurtrolle, ausgebildet ist.

Ausführungsbeispiele der Erfindung sind in den Figuren dargestellt und werden im Folgenden näher beschrieben.

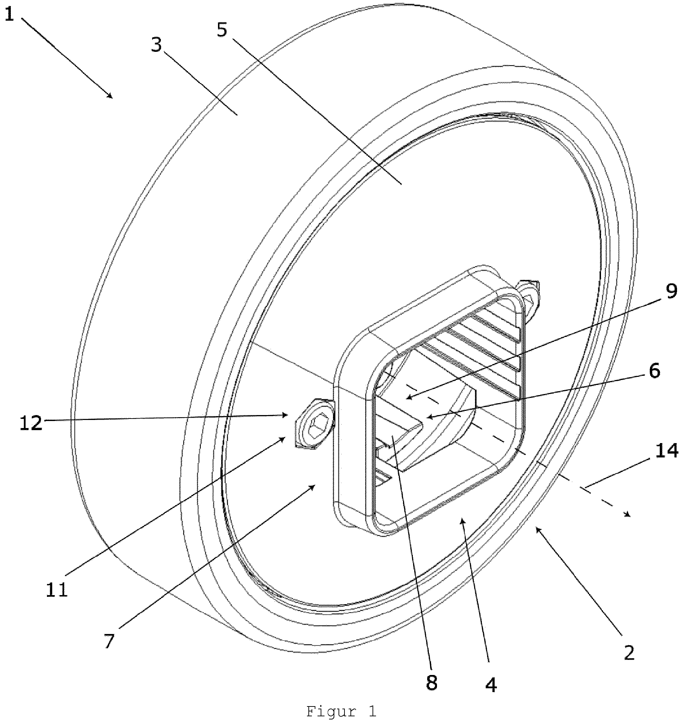

Es zeigen
- Fig. 1: eine perspektivische Ansicht einer Tragrolle;

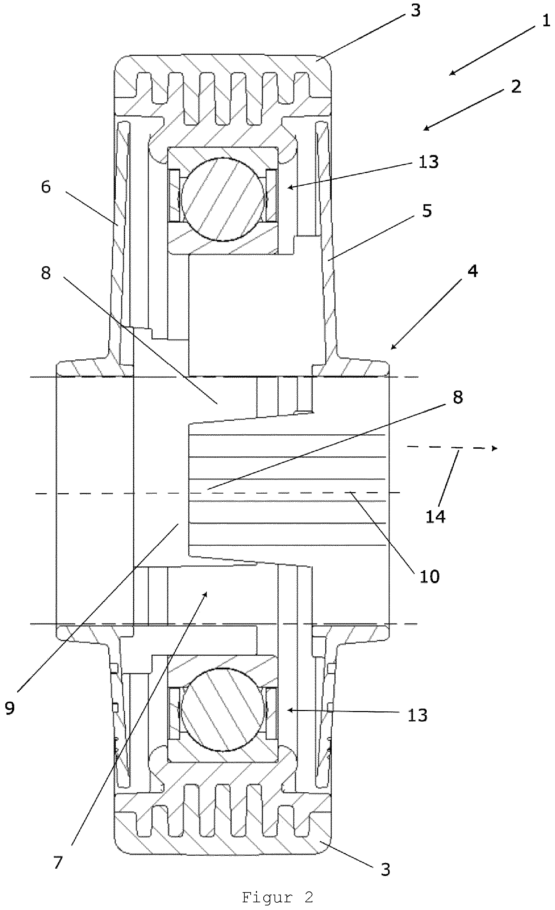

- Fig. 2: eine Schnittzeichnung einer Tragrolle; sowie

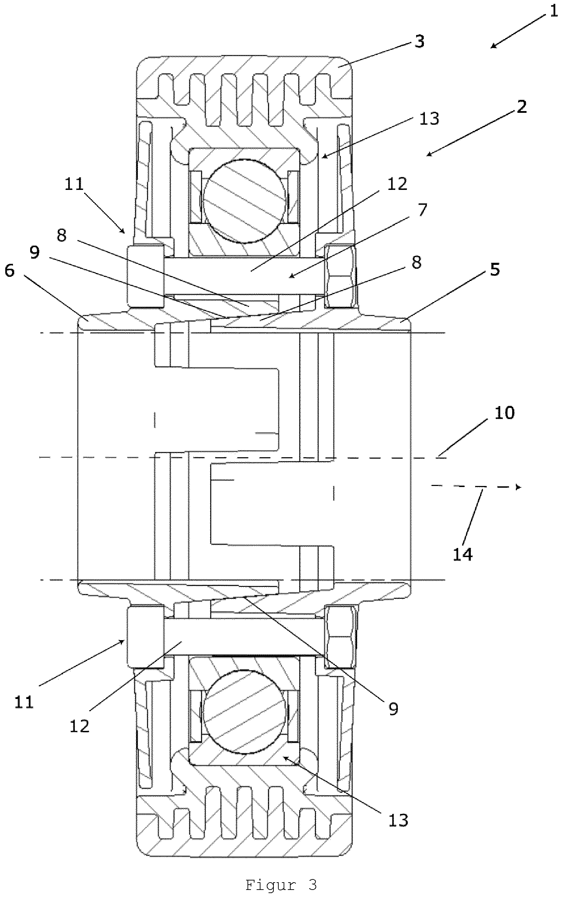

- Fig. 3: eine weitere Schnittzeichnung einer Tragrolle.

In einer Zusammenschau der Figuren ist das Folgende dargestellt, wobei gleiche Elemente die gleichen Bezugszeichen tragen.

Eine Tragrolle (1), umfassend einen Träger (2), sowie einen um den Träger (2) umlaufend drehbar gelagerten Mantel (3), wobei der Träger (2) eine quadratisch ausgebildete Achsaufnahme (4) aufweist, wobei die Achsaufnahme (4) dazu ausgebildet ist, den Träger (2) drehfest an einer Achse zu befestigen, wobei die Achsaufnahme (4) exzentrisch zu einem Zentrum des Mantels (3) und einem Zentrum des Trägers (2) und an dem Träger (2) ausgebildet ist. Die Achsaufnahme (4) ist derart exzentrisch angeordnet ist, sodass ein Durchmesser der Tragrolle (1) von einem axialen Zentrum der Achsaufnahme (4) in einem Verhältnis von 1:2 geteilt wird. Der Träger (2) ist mehrteilig ausgebildet. Der Träger (2) umfasst eine erste Trägerkappe (5) und eine zweite Trägerkappe (6), wobei beide Trägerkappen (5, 6) identisch ausgebildet sind, wobei jede der Trägerkappen (5, 6) in einer Draufsicht auf ihre Innenseite asymmetrisch ausgebildet ist.

Vorteilhaft kann so ein Außendurchmesser bei stehenden Untergurtrollen verringert werden und durch die exzentrische Anordnung kann eine im Verhältnis zum Außendurchmesser hoher Abstand zwischen Außenkontur des Mantels und der Achse realisiert werden, was sich zusätzlich vorteilhaft bei Fördergurten mit hohen Stollen auswirken und einen entsprechenden Einsatz ermöglichen kann. Eine quadratische Achsaufnahme ermöglicht zusätzlich das Mitdrehen der Tragrolle zu verhindern.

Die Trägerkappen (5, 6) sind als Klemmmittel (7) ausgebildet, die zur axialen und drehfesten Befestigung des Trägers (2) an der Achse ausgebildet sind. Jede Trägerkappe (5, 6) umfasst im Bereich der Achsaufnahme (4) axial hervorstehende Nasen (8), wobei diese jeweils eine axiale ausgerichtete Anlaufschräge (9) aufweisen und wobei die Nasen (8) zur Trägerkappenachse (10) versetzt angeordnet sind. Jede der beiden Trägerkappen (5, 6) umfasst zwei in axialer Richtung (14) und radial zu der Achsaufnahme (4) beabstandet verlaufende Durchgangsbohrungen (11), welche derart ausgebildet sind, dass die Trägerkappen (5, 6) mittels Verbindungsmitteln (12) zusammengezogen werden können.

Vorteilhaft kann so eine einfache und stabile Befestigung an einer Achse realisiert werden, die mit geringem Aufwand an Werkzeugen, beispielsweise zur Wartung, installiert und deinstalliert werden kann.

Der Träger (2) umfasst ein Lager (13), welches zwischen den Trägerkappen (5, 6) derart gehalten ist, dass der Mantel (3) auf dem Lager (13) zwischen den Trägerkappen (5, 6) frei drehbar abgestützt ist, wobei das Lager (13) als Kugellager ausgebildet ist. Die Achsaufnahme des Trägers (2) ist mittels der beiden Trägerkappen (5, 6) gebildet. Vorteilhaft kann so auf zusätzliche Elemente verzichtet werden und die Konstruktion vereinfacht werden.

Nicht in den Figuren dargestellt ist eine Vorrichtung zum Stützen eines Untergurts eines Förderers, umfassend wenigstens eine Tragrolle (1), sowie eine Achse zur Befestigung der Tragrolle (1), wobei die Tragrolle (2) nach einem der vorangehenden Ansprüche, insbesondere als sogenannte stehende Untergurtrolle, ausgebildet ist. Weiterhin ist in den Figuren nicht dargestellt, dass ein Profil der Achse derart ausgebildet ist, sodass ein Drehen des Trägers (2) relativ zu der Achse verhindert ist, wobei das Profil der Achse insbesondere einem Kantprofil oder einem Quadratrohr, bevorzugt einem Vier-Kant-Rohr entspricht.

Außerdem ist in den Figuren nicht dargestellt eine Vorrichtung zum Fördern von Gütern oder Materialien, insbesondere Abfall, umfassend wenigstens eine Antriebswelle, wenigstens eine Abtriebswelle und wenigstens einen Fördergurt, wobei der wenigstens eine Fördergurt einen Obertrum, sowie einen Untertrum umfasst, wobei der Untertrum mittels wenigstens einer Tragrolle (1) gestützt ist, wobei die Tragrolle (2) nach wenigstens einem der vorausgehenden Ansprüche, insbesondere als sogenannte stehende Untergurtrolle, ausgebildet ist.

### Bezugszeichen:

| |
|---|
| Tragrolle (1) |
| Träger (2) |
| Mantel (3) |
| Achsaufnahme (4) |
| erste Trägerkappe (5) |
| zweite Trägerkappe (6) |
| Klemmmittel (7) |
| Nasen (8) |
| Anlaufschräge (9) |
| Trägerkappenachse (10) |
| Durchgangsbohrungen (11) |
| Verbindungsmitteln (12) |
| Lager (13) |
| axiale Richtung (14) |

## Patentansprüche

1. Tragrolle (1), umfassend
einen Träger (2),
sowie einen um den Träger (2) umlaufend drehbar gelagerten Mantel (3),
wobei der Träger (2) eine Achsaufnahme (4) aufweist,
wobei die Achsaufnahme (4) dazu ausgebildet ist, den Träger (2) drehfest insbesondere an einer Achse zu befestigen,
**dadurch gekennzeichnet, dass**
die Achsaufnahme (4) exzentrisch zu einem Zentrum des Mantels (3) und/oder einem Zentrum des Trägers (2) und an dem Träger (2) ausgebildet ist.

2. Tragrolle (1) nach Anspruch 1,
**dadurch gekennzeichnet, dass**
die Achsaufnahme (4) derart exzentrisch angeordnet ist, sodass ein Durchmesser der Tragrolle (1) von einem axialen Zentrum der Achsaufnahme (4) in einem Verhältnis von 1:2, insbesondere 1:3, bevorzugt 1:4 geteilt wird.

3. Tragrolle (1) nach einem der vorangehenden Ansprüche,
**dadurch gekennzeichnet, dass**
der Träger (2) mehrteilig ausgebildet ist,
wobei der Träger (2) eine erste Trägerkappe (5) und eine zweite Trägerkappe (6) umfasst,
wobei beide Trägerkappen (5, 6) identisch ausgebildet sind,
wobei jede der Trägerkappen (5, 6) in einer Draufsicht auf ihre Innenseite asymmetrisch ausgebildet ist.

4. Tragrolle (1) nach einem der vorangehenden Ansprüche,
**dadurch gekennzeichnet**,
entweder dass der Träger (2) oder wenigstens eine der Trägerkappen (5, 6) Klemmmittel (7) umfasst oder aufweist, oder dass der Träger oder wenigstens eine der Trägerkappen (5, 6) als Klemmmittel (7) ausgebildet ist,
wobei die Klemmmittel (7) zur axialen und drehfesten Befestigung des Trägers (2) an der Achse ausgebildet sind.

5. Tragrolle (1) nach Anspruch 3,
**dadurch gekennzeichnet, dass**
jede Trägerkappe (5, 6) im Bereich der Achsaufnahme (4) axial hervorstehende Nasen (8) umfasst,
wobei die Nasen (8) jeweils eine axiale ausgerichtete Anlaufschräge (9) aufweisen und wobei die Nasen (8) zur Trägerkappenachse (10) versetzt angeordnet sind.

6. Tragrolle (1) nach einem der vorangehenden Ansprüche,
**dadurch gekennzeichnet, dass**
die Achsaufnahme (4) quadratisch ausgebildet ist.

7. Tragrolle (1) nach einem der vorangehenden Ansprüche,
**dadurch gekennzeichnet, dass**
jede der beiden Trägerkappen (5, 6) wenigstens zwei in axialer Richtung (14) und radial zu der Achsaufnahme (4) beabstandet verlaufenden Durchgangsbohrungen (11) umfasst, welche derart ausgebildet sind, dass die Trägerkappen (5, 6) mittels Verbindungsmitteln (12) zusammengezogen werden können.

8. Tragrolle nach einem der vorangehenden Ansprüche, **dadurch gekennzeichnet, dass**
der Träger (2) ein Lager (13) umfasst, welches zwischen den Trägerkappen (5, 6) derart gehalten ist, dass der Mantel (3) auf dem Lager (13) zwischen den Trägerkappen (5, 6) frei drehbar abgestützt ist, wobei das Lager (13) insbesondere als Kugellager oder als Rollenlager oder als Gleitlager ausgebildet ist.

9. Tragrolle (1) nach einem der vorangehenden Ansprüche, **dadurch gekennzeichnet, dass** die Achsaufnahme des Trägers (2) mittels der beiden Trägerkappen (5, 6) gebildet ist.

10. Vorrichtung zum Stützen eines Untergurts eines Förderers, umfassend wenigstens eine Tragrolle (1), sowie eine Achse zur Befestigung der Tragrolle (1),
**dadurch gekennzeichnet, dass**
die Tragrolle (2) nach einem der vorangehenden Ansprüche, insbesondere als sogenannte stehende Untergurtrolle, ausgebildet ist.

11. Vorrichtung nach Anspruch 10,
**dadurch gekennzeichnet, dass**
ein Profil der Achse derart ausgebildet ist, sodass ein Drehen des Trägers (2) relativ zu der Achse verhindert ist,
wobei das Profil der Achse insbesondere einem Kantprofil oder einem Quadratrohr, bevorzugt einem Vier-Kant-Rohr entspricht.

12. Vorrichtung zum Fördern von Gütern oder Materialien, insbesondere Abfall,
umfassend
wenigstens eine Antriebswelle,
wenigstens eine Abtriebswelle und
wenigstens einen Fördergurt,
wobei der wenigstens eine Fördergurt einen Obertrum, sowie einen Untertrum umfasst,
wobei der Untertrum mittels wenigstens einer Tragrolle (1) gestützt ist,
**dadurch gekennzeichnet, dass**
die die Tragrolle (2) nach wenigstens einem der vorausgehenden Ansprüche, insbesondere als sogenannte stehende Untergurtrolle, ausgebildet ist.
